# EUROPÄISCHE PATENTANMELDUNG

(11) **EP 0 714 205 A2**
(43) Veröffentlichungstag der Anmeldung: **29.05.1996**
(21) Anmeldenummer: 95118256.7
(22) Anmeldetag: 20.11.1995
(51) Int. Cl.: H04N 7/087

(54) **Teletextverarbeitungseinrichtung**

(30) Priorität: 22.11.1994 DE 4441576
(71) Anmelder: SIEMENS AKTIENGESELLSCHAFT, D-80333 München (DE)
(72) Erfinder: Frieling, Focko, Dipl.-Ing., D-29356 Bröckl (DE)

(57) **Zusammenfassung**

Eine Teletextverarbeitungseinrichtung (107) enthält einen bildpunktstrukturierten Darstellungsspeicher. Ein erster Speicherbereich (1) enthält eine Speicherstelle für jeden darzustellenden Bildpunkt. Ein zweiter Speicherbereich (2) enthält Zeiger (14, 15), die mindestens einem Bildpunkt (12 bzw. 18) zugeordnet sind und auf ein in einem dritten Speicherbereich (3) enthaltenes Darstellungsattribut (16 bzw. 17) hinweisen. Beim Auslesen der Bildpunkte aus dem ersten Speicherbereich (1) wird, sofern ein entsprechender Zeiger im zweiten Speicherbereich (2) gesetzt ist, das diesbezügliche Darstellungsattribut des dritten Speicherbereichs (3) an einen Darstellungsgenerator (113) übertragen, der Ansteuersignale (RGB) für den Bildschirm erzeugt.

## Beschreibung

Die Erfindung betrifft eine Teletextverarbeitungseinrichtung nach dem Oberbegriff des Patentanspruchs 1.

In der Siemens-Produktinformation "IC's for Consumer Electronics - Megatext - SDA 5273 - System Overview)", Ausgabe 5.93, insbesondere Seiten 15 und 16, ist eine herkömmliche Teletextverarbeitungseinrichtung beschrieben. Die an einem Bildschirm darzustellende Information wird in einem Arbeitsspeicher zwischengespeichert. Es können sowohl Textdaten als auch graphische Daten am Bildschirm dargestellt werden. Die kleinste adressierbare Informationseinheit im Speicher wird durch das in bezug auf Zeilen und Spalten (25 Zeilen x 40 Spalten) vorgegebene Teletextdarstellungsformat für Level-1-WST (Word System Teletext) bestimmt. Auch graphische Information wird in dieses Zeilen/Spalten-Raster unterteilt, so daß nur Blöcke aus 12 Bildpunkten adressierbar sind. Darüber hinaus ist jedem solchen Text- bzw. Grafikzeichen ein Darstellungsattribut zugeordnet. Durch das Attribut können verschiedene Darstellungsmodi, beispielsweise Fettschrift, Unterstreichen, Hintergrundfarbe etc., eingestellt werden. In einem Darstellungsgenerator werden aus der vom Zwischenspeicher bereitgestellten Information unter Berücksichtigung der Darstellungsattribute die Ansteuersignale für den Bildschirm erzeugt. Die Grafikzeichen werden dabei wie im Speicher vorliegend übernommen, zur Darstellung der Textzeichen wird von einem Zeichenfestspeicher bereitgestellte Darstellungsinformation verwendet.

Da die Adressierung des Arbeitsspeichers an der Zeilen/Spalteneinteilung des Arbeitsspeichers orientiert ist, können Grafikdaten nur unvollkommen verarbeitet werden. Grafiken können nur an einer Position und in einer Größe dargestellt werden, die an das Zeilen/Spaltenraster angepaßt sind. Darstellungsattribute können nur im vorgegebenen Raster zugewiesen und geändert werden. Bei der Textdarstellung ist man außerdem auf einen Zeichensatz beschränkt, der das vorgegebene Zeilen/Spaltenraster berücksichtigt. Skalierbare Schriftgrößen oder Proportionalschrift sind nicht möglich.

In der Literaturstelle "Neue Leistungsmerkmale für einen künftigen Videotextstandard", Gerhard Möll, Rundfunktechnische Mitteilungen, Jahrgang 27 (1993), Heft 3, Seite 116 bis 134 ist ein Endgerät zur Teletextverarbeitung beschrieben. Insbesondere auf Seite 125, linke Spalte, Mitte ist in Zusammenhang mit Bild 14 die Speicherorganisation für einen Teletextempfänger angegeben. Jedem Teletextzeichen ist dabei im Zeichenspeicher ein Zeigerbit zugeordnet, das auf die Verwendung einer Attributinformation hinweist, die in einem zweiten Teil des Speichers, dem Attributspeicher, abgelegt ist. Die Zeichen des Zeichenspeichers sind als Zeichencode abgespeichert. Ein Zeichen entspricht dabei in der Darstellung am Bildschirm einer gemäß einem vorvereinbarten Zeichensatz festgelegten Matrix von beispielsweise 10 x 12 Bildpunkten.

Die Aufgabe der vorliegenden Erfindung besteht darin, eine Teletextverarbeitungseinrichtung der eingangs genannten Art derart zu verbessern, daß eine flexiblere Darstellung der Daten möglich ist.

Erfindungsgemäß wird diese Aufgabe durch die kennzeichnenden Merkmale des Patentanspruchs 1 gelöst.

In Patentanspruch 8 ist ein Gerät zum Verarbeiten von in Zeilen aufgeteilten Videosignalen angegeben, das eine erfindungsgemäße Teletextverarbeitungseinrichtung enthält.

Bei der erfindungsgemäßen Teletextverarbeitungseinrichtung ist die am Bildschirm darzustellende Information bereits in Bildpunktauflösung im Arbeitsspeicher zwischengespeichert. Dies bedeutet, daß die Information in der Auflösung der Bildschirmdarstellung im Arbeitsspeicher gespeichert ist.

Jedem darzustellendem Bildpunkt ist eine Speicherstelle zugeordnet, in der der darzustellende Helligkeitswert und je nach Verarbeitungsstandard gegebenenfalls auch der zugehörige Farbwert gespeichert ist. Text und Grafiken können in beliebiger Größe an jede Stelle des Bildschirms gesetzt werden. Insbesondere sind skalierbare Schriftgrößen und Proportionalschrift möglich. Es ist deshalb auch möglich, andere als dem bisherigen Level-1-WST-Standard entsprechende Teletextdaten darzustellen. Die Teletextverarbeitungseinrichtung ist demnach auch auf noch festzulegende höhere grafikorientierte Teletextstandards anpaßbar.

Durch die Verwendung von Attributzeigern wird erreicht, daß nur dann eine Attributinformation im Arbeitsspeicher zwischenzuspeichern ist, wenn eine Attributänderung vorliegt. Dadurch wird die bisherige feste Speicherplatzzuordnung von darzustellendem Zeichen und Darstellungsattribut aufgegeben. Die Nutzung des Arbeitsspeichers wird hierdurch verbessert.

Nachfolgend wird die Erfindung anhand des in der Zeichnung dargestellten Ausführungsbeispiels näher erläutert. Es zeigen:
- Figur 1: einen Ausschnitt aus einer erfindungsgemäß Teletextverarbeitungseinrichtung und
- Figur 2: ein Fernsehgerät mit der erfindungsgemäßen Teletextverarbeitungseinrichtung.

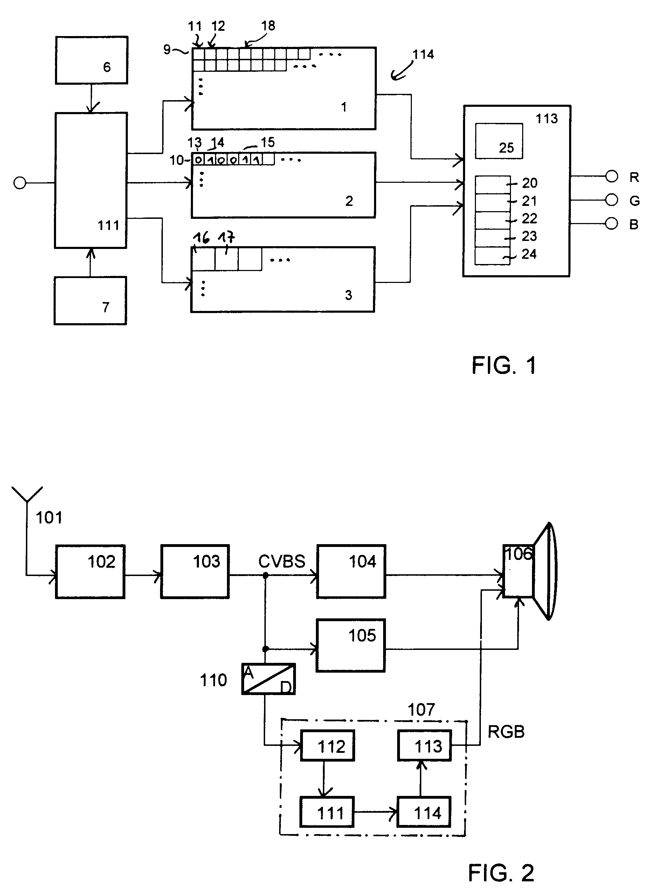

Ein erfindungsgemäßes Gerät kann beispielsweise - wie in Figur 2 dargestellt - als Fernsehempfangsgerät ausgeführt werden. Das Fernsehgerät empfängt über eine Antenne 101 ein Fernsehsignal. In einem Tuner 102 wird das Frequenzband des eingestellten Senders selektiert und in einer Zwischenfrequenz- und Demodulationsstufe 103 das dem eingestellten Sender entsprechende Videosignal auf Zwischenfrequenzlage umgesetzt und demoduliert. Am Ausgang der Einrichtung 103 liegt das Videosignal CVBS im Basisband vor. In einer Bildverarbeitungseinrichtung 104 werden aus dem Videosignal CVBS Farb- und Helligkeitssignale zur Ansteuerung einer Bildröhre 106 erzeugt. In einer Einrichtung 105 werden aus dem Videosignal CVBS Horizontal- und Vertikalimpulse zur Ablenkung des Elektronenstrahls der Bildröhre 106 erzeugt. Eine Einrichtung 107 dient zur Verarbeitung der Teletextsignale.

Der Einrichtung 107 wird das Videosignal CVBS über eine Analog-Digital-Wandlereinrichtung 110 digitalisiert zugeführt. Die Einrichtung 107 erzeugt Ausgangssignale RGB zur Ansteuerung der Bildröhre 106. Die Teletextverarbeitungseinrichtung 107 weist am Eingang für das Videosignal CVBS eine Akquisitionseinrichtung 112 auf. Diese enthält im einzelnen eine Klemmschaltung zur Klemmung des Videosignals auf einen Referenzpegel, einen nachgeschalteten Daten-Slicer, durch den die Daten vom Videosignal abgetrennt werden, und eine Akquisitionsschnittstelle, durch die empfangenen Daten in ein einrichtungsinternes Format und ein internes Taktraster umgesetzt werden. Darüber hinaus enthält die Teletextverarbeitungseinrichtung Synchronisierschaltungen und Taktaufbereitungsschaltungen zur Steuerung der Akquisitionseinrichtung 112.

Die durch die Akquisitionseinrichtung 112 aufbereiteten Daten werden einer Steuerungseinrichtung 111 zugeführt. Diese kann als Mikroprozessorkern ausgeführt sein, vorzugsweise in einer RISC-Ausführung. Durch die Steuerungseinrichtung 111 wird der Datenfluß in der Einrichtung 107 gesteuert. Zur externen Steuerung ist in der Einrichtung 107 eine digitale Schnittstelle, beispielsweise nach dem I2C oder M3L-Standard vorgesehen.

Die am Bildschirm 106 darzustellende Information wird in einem Speicher 114 zwischengespeichert. Die Ausführung des Speichers 114 wird später noch detaillierter beschrieben. Ein dem Speicher 114 nachgeschalteter Displaygenerator 113 erzeugt aus den im Speicher 114 gespeicherten Daten RGB-Signale, die zur Ansteuerung des Bildschirms 106 verwendet werden.

Der Displaygenerator 113 kann darüber hinaus einen FIFO-Speicher enthalten, der zur Umsetzung von 4:3- auf 16:9-Bildschirmformat dient. Außerdem ist eine Digital-Analog-Wandlung ausgangsseitig im Generator 113 vorgesehen. Darüber hinaus weist die Einrichtung 107 entsprechende Taktsteuerungseinrichtungen für den Generator 113 auf.

Die Einrichtungen 111, 114, 113 sind in der Figur 1 detaillierter dargestellt. Der Speicher 114 weist einen ersten Speicherbereich 1, einen zweiten Speicherbereich 2 und einen dritten Speicherbereich 3 auf. Der Speicherbereich 1 enthält sämtliche Bildpunkte des am Bildschirm darstellbaren Bildes. Für jeden Bildpunkt ist eine einzeln adressierbare Speicherstelle vorgesehen. Beispielsweise enthält eine Speicherstelle einen Datenwert von 4 bit, so daß eine Helligkeitsinformation mit 16 Graustufen dargestellt werden kann.

Im Speicherbereich 2 sind für bestimmte im Speicherbereich 1 gespeicherte Bildpunkte Zeiger auf im Speicherbereich 3 abgelegte Darstellungsattribute enthalten. Die Zuordnung zwischen Zeiger, Darstellungsattribut und Bildpunkten ist wie folgt ausgeführt: Je nach Ausführungsform ist für jede oder für eine Anzahl von im Speicherbereich 1 enthaltene Bildschirmzeilen eine Zeile im Speicher 2 vorgesehen. In jeder Zeile des Speichers 2 ist ein Datenbit für den entsprechenden Bildpunkt der Zeile bzw. entsprechender am Bildschirm übereinanderliegender Bildpunkte der Anzahl von Zeilen des Speicherbereichs 1 vorgesehen. Eine Speicherstelle des Speicherbereichs 2 enthält den Datenwert "0" oder "1". Der eine Datenwert ("1") bedeutet, daß im Speicherbereich 3 ein Darstellungsattribut gespeichert ist. Dieses Darstellungsattribut soll an der Bildschirmstelle des entsprechenden Bildpunktes im Speicherbereich 1 aktiv werden. Der andere Wert ("0") bedeutet, daß für den entsprechenden Bildpunkt im Speicherbereich 1 kein Darstellungsattribut gespeichert ist.

In der beispielhaft dargestellten Ausführung des Speichers 114 ist eine Zeile 10 im Speicherbereich 2 fünf Zeilen (von denen zwei dargestellt sind) des Speicherbereichs 1 zugeordnet. Den fünf übereinander liegenden Bildpunkten 11 ist die Speicherstelle 13 des Speicherbereichs 2 zugeordnet. Den Bildpunkten 12 (bzw. 18) entsprechend die Speicherstelle 14 (bzw. 15). Der in der Speicherstelle 13 gespeicherte Wert "0" bedeutet, daß im Speicherbereich 3 kein den Bildpunkten 11 zugeordnetes Darstellungsattribut abgespeichert ist. Dies hat zur Folge, daß die bisher bereits vorliegenden Darstellungsattribute, die in der den Bildpunkten 11 vorhergehenden Verarbeitung eingestellt wurden, beibehalten werden. Der Datenwert "1" in der Speicherstelle 14 bedeutet, daß im Speicherbereich 3 ein Darstellungsattribut 16 vorhanden ist, welches mit dem Auftreten des Bildpunktes 12 in der Zeile 9 aktiv wird. Das entsprechende bisherige Darstellungsattribut wird mit dem Darstellungsattribut 16 überschrieben. An der Speicherstelle 15 des Speicherbereichs 2 liegt die nächste Speicherstelle mit dem Datenwert 1 vor. Ihr ist das Darstellungsattribut 17 zugeordnet

Die Darstellungsattribute 16, 17 beschreiben Formateinstellungen, durch die die vom Displaygenerator 113 ausgegebene im Speicherbereich 1 gespeicherte Bildinformation formatiert wird. Beispielsweise sind dies Hintergrund- oder Vordergrundfarbe, Blinkfunktion, Inversdarstellung, Fettschrift, Unterstreichen von Buchstaben, etc. Die Darstellungsattribute sind in Teletextstandards, z. B. Level-1-WST, definiert und werden vom Fernsehsender übertragen. Die Darstellungsattribute können in einer Anzahl von Darstellungsattributtypen aufgeteilt werden. Ein erster Typ bezieht sich beispielsweise auf Darstellungseigenschaften, die die gesamte ihr zugeordnete Zeile bzw. Anzahl von Zeilen der Bildpunkte im Speicherbereich 1 betreffen. Ein anderer Attributtyp bezieht sich auf eine Anzahl von aufeinanderfolgenden Zeichen, ein wiederum anderer Attributtyp beispielsweise auf einen einzelnen Bildpunkt bzw. die jeweiligen Bildpunkte der ihm zugeordneten Zeilen. Für jeden dieser Attributtypen ist im Displaygenerator 113 ein Register vorgesehen, z. B. die Register 20...24.

In den Registern 20...24 werden die jeweiligen aktuell vorliegenden Attributtypen zwischengespeichert und für die attributgemäße Umsetzung der im Speicherbereich 1 gespeicherten Darstellungsinformation nach bekannten Verfahrensschritten umgesetzt. Ein in den Registern 20...24 gespeicherter Attributtyp wird dann, wenn der entsprechende Attributtyp im Speicherbereich 3 neu auftritt, mit dem neuen Wert überschrieben. Die Auslesesteuerung zum Auslesen aus den Speicherbereichen 1, 2, 3 wird vom Displaygenerator 113 ausgeführt. Dieser enthält hierzu zweckmäßigerweise einen Zähler 25, um die jeweils aktuelle Position im Darstellungsattributspeicher 3 anzuzeigen. Bei jedem Auftreten des Binärwerts 1 im Speicherbereich 2 wird der Zähler 25 inkrementiert, um die Ausleseposition für ein neues Darstellungsattribut im Speicherbereich 3 anzuzeigen. Das ausgelesene Darstellungsattribut wird in demjenigen seinem Typ entsprechenden der Register 20...24 zur Anwendung auf die Bildschirmdarstellung abgelegt.

Eine vorteilhafte Anwendung der Teletextverarbeitungseinrichtung 107 liegt dann vor, wenn ein Speicher 7 für einen Zeichensatz vorgesehen ist. Der Zeichensatz enthält vorzugsweise Proportionalschriftzeichen. Bei einer Proportionalschrift können die Zeichenlängen der einzelnen Zeichen unterschiedlich sein. In Abhängigkeit der in die Steuerungseinrichtung 111 eingespeisten Zeichen können dann die Bildpunktinformation und die zuordenbaren Attribute im Speicher 114 in Bildpunktauflösung abgelegt werden. Es genügt, wenn der Zeichensatz im Speicher 7 in einer einzigen Schriftgröße gespeichert ist. Während der Umsetzung in die Bildpunktinformation durch die Steuerungseinrichtung 111 kann die Schriftgröße ohne weiteres skaliert werden. Der Zeichensatz kann im Speicher 107 nichtflüchtig gespeichert werden. Es ist auch möglich, daß durch die Datenübertragung in den Pseudoreihen des Teletextstandards der Zeichensatz übertragen und im Speicher 7 flüchtig gespeichert wird. Durch die Steuerungseinrichtung 111 kann der im Speicher 7 gespeicherte Zeichensatz auf die in den sichtbaren Teletextzeilen übertragene Zeichen wie oben beschrieben angewandt werden. Die senderseitig übertragenen Teletextdaten werden dabei in einem Speicher 6 seitenweise zur Pufferung zwischengespeichert. Auf diese Weise ist es beispielsweise möglich, mittels des Teletextdienstes am Bildschirm 106 ein Teletextseite zur Darstellung zu bringen, die solche in Druckmedien üblichen Gestaltungsmerkmale aufweist, wie z. B. unterschiedliche Schriftgrößen für Überschrift, Untertitel und Text, Kursivschrift, Proportionalschrift, Aufteilung des Textes in Spalten oder Darstellung von Grafiken an beliebiger Stelle im Text.

Eine erfindungsgemäße Teletextverarbeitungseinrichtung 107 ist demzufolge auch für die Darstellung beliebiger Zeichen- und Grafikinformation am Bildschirm 106 eines Fernsehgeräts geeignet. Außerdem ist die Teletextverarbeitungseinrichtung offen für spätere, noch zu definierende höhere Teletextstandards. Die vorzunehmende Anpassung würde in einer Änderung der Software der Steuerungseinrichtung 111 liegen, so daß die im Speicher 114 zwischenzuspeichernde Bildschirminformation gemäß dem Standard zusammengesetzt wird, und darin, daß die Akquisitionseinrichtung 112 entsprechend dem Standard softwaremäßig angepaßt wird.

## Patentansprüche

1. Teletextverarbeitungseinrichtung, enthaltend:
- einen Eingangsanschluß, dem ein Videosignal (CVBS) zuführbar ist,
- eine mit dem Eingangsanschluß verbundene Abtrenneinrichtung (112) zur Abtrennung von Teletextdaten aus dem Videosignal (CVBS),
- einen Speicher (114) mit einem ersten Speicherbereich (1) mit einer Vielzahl von Speicherstellen (11, 12, 18) zur Speicherung von an einem Bildschirm (106) darzustellender Information (11, 12, 16), einem zweiten Speicherbereich (2) zur Speicherung eines Zeigers (14, 15) auf mindestens ein Darstellungsattribut (16, 17), der mindestens einer Speicherstelle (12, 18) des ersten Speicherbereichs (1) zugeordnet ist, und einem dritten Speicherbereich (3) zur Speicherung des Darstellungsattributs (16, 17),
- einer Steuerungseinrichtung (111) zur Erzeugung der Information und des mindestens einen Darstellungsattributs aus den Teletextdaten,
- einer Signalerzeugungseinrichtung (113) zur Erzeugung von an einem Bildschirm darstellbaren Signalen (RGB) aus der Information unter Verwendung des mindestens einen Darstellungsattributs,
**dadurch gekennzeichnet,** daß
- der erste Speicherbereich (1) eine Vielzahl von Speicherstellen für je einen Bildpunkt (11, 12, 18) der am Bildschirm darzustellenden Information aufweist

2. Einrichtung nach Anspruch 1,
**dadurch gekennzeichnet,** daß
die Bildpunkte in bezug auf ihre Darstellung in Zeilen aufgeteilt sind und den Speicherstellen des ersten Speicherbereichs (1) für übereinanderliegende Bildpunkte von einer Anzahl von Zeilen gemeinsam jeweils eine Speicherstelle (13, 14, 15) des zweiten Speicherbereichs (2) zugeordnet ist.

3. Einrichtung nach Anspruch 2,
**dadurch gekennzeichnet,** daß
die Anzahl von Zeilen mit übereinanderliegenden Bildpunkten eine Anzahl von einer oder mehreren Zeilen umfaßt.

4. Einrichtung nach einem der Ansprüche 1 bis 3,
**dadurch gekennzeichnet,** daß
die Signalerzeugungseinrichtung (113) eine Anzahl von n Registern (20, ..., 24) enthält, daß n Typen von Darstellungsattributen vorgesehen sind und daß je einem Typ ein Register zugeordnet ist, in dem ein Darstellungsattribut dieses Typs speicherbar ist.

5. Einrichtung nach Anspruch 4,
**dadurch gekennzeichnet,** daß
mindestens einem Bildpunkt (11, 12, 18) eine Speicherstelle (13, 14, 15) im zweiten Speicherbereich (2) zugeordnet ist, daß in Abhängigkeit von dem in der Speicherstelle des zweiten Speicherbereichs gespeicherten Wert ("0", "1") ein im dritten Speicherbereich (3) gespeichertes Datenattribut (16, 17) in das seinem Typ zugeordnete Register (20, ..., 24) der Signalerzeugungseinrichtung (113) auslesbar ist.

6. Einrichtung nach Anspruch 5,
**dadurch gekennzeichnet,** daß
eine Zähleinrichtung (25) vorgesehen ist, die in Abhängigkeit von dem aus der Speicherstelle (13, 14, 15) des zweiten Speicherbereichs (2) ausgelesenen Wert (0, 1) zählbar ist, und daß der Zählerstand eine Speicherstelle eines der Datenattribute (16, 17) des dritten Speicherbereichs (3) angibt.

7. Einrichtung nach einem der Ansprüche 1 bis 6,
**dadurch gekennzeichnet,** daß
ein Speicherbereich (7) für Schriftzeichen vorgesehen ist, auf den durch die Steuerungseinrichtung (111) in Abhängigkeit von den Teletextdaten zugreifbar ist, und daß die Schriftzeichen Proportionalschriftzeichen enthalten.

8. Gerät zum Verarbeiten von in Zeilen aufgeteilten Videosignalen, das die Einrichtung (107) nach einem der vorhergehenden Ansprüche enthält sowie einen Bildschirm, durch der zur Darstellung der Information von der Einrichtung ansteuerbar ist.
